# EUROPÄISCHE PATENTSCHRIFT

(11) **EP 2 189 861 B1**
(45) Veröffentlichungstag und Bekanntmachung des Hinweises auf die Patenterteilung: **31.10.2012**
(21) Anmeldenummer: 08020399.5
(22) Anmeldetag: 24.11.2008
(51) Int. Cl.: G05B 19/4093

(54) **Verfahren zur Erstellung eines Teileprogramms**
Method for creating a part program
Procédé de fabrication d'un programme de pièce

(43) Veröffentlichungstag der Anmeldung: 26.05.2010
(73) Patentinhaber: Siemens Aktiengesellschaft, 80333 München (DE)
(72) Erfinder: Bretschneider, Jochen, Dr., 73732 Esslingen (DE); Schleider, Ulrich, 90451 Nürnberg (DE)

(56) Entgegenhaltungen:
- EP-A- 1 637 947
- WO-A-2007/036489
- DE-A1- 10 222 521

## Beschreibung

Die Erfindung betrifft ein Verfahren zur Erstellung eines Teileprogramms. Weiterhin betrifft die Erfindung einen Rechner zum Durchführen des Verfahrens.

Werkzeugmaschinen werden heutezutage mit Hilfe einer Steuereinrichtung, wie z.B. einer CNC-Steuerung, gesteuert. Dabei steuert die Steuereinrichtung die Bewegungen eines Maschinenelements, der Werkzeugmaschine, wie z.B. einer Werkzeughaltevorrichtung, in der ein Werkzeug eingespannt ist, anhand eines Teileprogramms. Das Teileprogramm besteht dabei aus Steuerbefehlen, die von der Steuereinrichtung eingelesen und interpretiert werden. Entsprechend den Steuerbefehlen steuert die Steuereinrichtung die Bewegung des Maschinenelements und damit die Bewegung des Werkzeugs der Werkzeugmaschine.

Zur Erstellung eines Teileprogramms werden dabei von einem CAM-System (Computer Aided Manufacturing) vorzugsweise in einem standardisierten Datenformat Bewegungsinformationen über durchzuführende Bewegungen des Werkzeugs erzeugt und von einem nachgeschalteten Postprozessor eingelesen. Der Postprozessor erzeugt anhand der vom CAM-System erzeugten Bewegungsinformationen, Maschinendaten der Werkzeugmaschine sowie PLC-Daten, ein für die jeweilige konkrete Werkzeugmaschine auf denen der Bearbeitungsvorgang stattfinden soll angepasstes Teileprogramm in Form von auf die konkrete Steuereinrichtung der Werkzeugmaschine angepassten Steuerbefehlen. Solchermaßen werden vom Postprozessor die vom CAM-System vorzugsweise in einem standardisierten Datenformat erzeugten Bewegungsinformationen in Steuerbefehle, die von der Steuereinrichtung eingelesen werden können und auf die jeweilige Steuereinrichtung angepasst sind, umgesetzt.

Der Postprozessor berücksichtigt dabei die konkreten maschinenspezifischen kinematischen Gegebenheiten der Werkzeugmaschine, wie z.B. Geometrie, maximale Verfahrbereiche der Antriebsachsen und Maximalgeschwindigkeiten des Maschinenelements. Diese Daten liegen in Form von Maschinendaten vor. Weiterhin werden vom Postprozessor bei der Erzeugung der Steuerbefehle maschinenspezifische PLC-Funktionalitäten (Programmable Logic Control), wie z.B. Schmierung, Werkzeugwechsel, Türverriegelung etc. berücksichtigt, wobei die PLC-Funktionalitäten in Form von PLC-Daten dem Postprozessor zur Verfügung stehen.

Die vom CAM-System erzeugten Bewegungsinformationen bestehen dabei einerseits in der Regel aus sogenannten GOTO-Anweisungen, die Informationen über durchzuführende Bewegungen des Werkzeugs enthalten und andererseits aus zusätzlichen Informationen über den durchzuführenden Bearbeitungsvorgang. So kann z.B. die Bewegungsinformation die Information enthalten, dass es sich bei den vorzugsweise nachfolgenden durchzuführenden Bewegungen des Werkzeugs um eine Schlichtbearbeitung handelt. Bei einer Schlichtbearbeitung müssen z.B. die Bewegungen des Werkzeugs derart durchgeführt werden, dass bei dem Bearbeitungsvorgang eine möglichst gute Oberflächengüte am Werkstück entsteht, wobei z.B. im Gegensatz dazu bei einer Schruppbearbeitung die Bewegungen des Werkzeugs möglichst schnell erfolgen sollen, wobei die Oberflächengüte des Werkstücks schlecht sein kann und z.B. Dellen und Erhebungen aufweisen kann.

Handelsübliche Steuereinrichtungen von Werkzeugmaschinen stellen dabei zur optimierten Durchführung von bestimmten Bearbeitungsvorgängen, wie z.B. Schlichten und Schruppen optimierte Steuerungsunterprogramme in der Steuereinrichtung zur Verfügung, die einerseits die Steuerungs- und/oder Regelparameter in der Steuereinrichtung und in der Steuereinrichtung nachgeschalteten Regeleinrichtungen entsprechend auf den konkreten Bearbeitungsvorgang anpassen, so dass für den konkreten Bearbeitungsvorgang optimierte Steuerungs- und/oder Regelparameter verwendet werden und andererseits spezifische NC-Funktionalitäten (Numerical Control), wie z.B. eine bestimmte Bewegungssteuerfunktionalität, zu- oder abschalten. Die Bewegungssteuerfunktionalität kann z.B. darin bestehen, dass in der Steuereinrichtung eine Funktionalität aktiviert wird, dass das Maschinenelement und damit das Werkzeug derart bewegt wird, dass möglichst keine Eigenschwingungen der Werkzeugmaschine angeregt werden und somit sich eine besonders hohe Oberflächengüte des Werkstücks bei der Bearbeitung des Werkstücks ergibt.

Diese zusätzlichen Informationen über die Bearbeitungsvorgänge innerhalb der vom CAM-System erzeugten Bewegungsinformationen werden aber bei handelsüblichen Postprozessoren gar nicht verwendet. Ein handelsüblicher Postprozessor hat weiterhin in der Regel gar keine Kenntnis darüber, welche für bestimmte Bewegungsvorgänge optimierten Steuerungsunterprogramme an der Steuereinrichtung zur Verfügung stehen. Dies führt dazu, dass handelsüblichen Postprozessoren keine Steuerungsunterprogrammaufrufe zum Aufruf des zu dem Bearbeitungsvorgang zugehörigen Steuerungsunterprogramms als Steuerbefehl automatisiert erzeugen und somit die für den jeweiligen Bewegungsvorgang, wie z.B. Schlichten optimierten NC-Funktionalitäten und Steuerungs- und/oder Regelparameter gar nicht bei der Steuerung des Bewegungsvorgangs des Werkzeugs verwendet werden. Will der Anwender diese trotzdem verwenden, mus er diese per Hand in das Teileprogramm einfügen. Häufig weiβ aber auch nicht einmal der Anwender, welche konkreten Steuerungsunterprogramme überhaupt zur Verfügung stehen, so dass die Steuerungsunterprogramme in der Praxis häufig nicht aufgerufen werden und somit die von der Werkzeugmaschine erreichbare Performance und Bearbeitungsgenauigkeit nicht ausgenutzt werden.

Aus der EP 1 637 947 A1 ist eine Methode und ein System zur Generierung von Befehlen zur Durchführung von Testroutinen bekannt, die auf einer Werkzeugmaschine ausgeführt werden.

Aus der WO 2007/036489 A1 ist ein Verfahren zur Optimierung eines Bearbeitungsprozesses bei einer Maschine bekannt, wobei ein einen Bearbeitungssatz aufweisendes Steuerprogramm den Bearbeitungsprozess steuert und eine während der Abarbeitung des Bearbeitungssatzes auftretende Prozessinformation bearbeitungssatzbezogen gespeichert wird.

Aus der DE 102 22 521 A1 ist ein Verfahren zur Verhinderung von Beschädigungen von Werkzeugen und/oder Werkstücken durch Bearbeitungsvorgänge auf numerisch gesteuerten Werkzeugmaschinen durch Vermeiden von Fehlern bei der Werkzeugauswahl bekannt.

Es ist Aufgabe der Erfindung eine einfache Erstellung eines Teileprogramms für eine Werkzeugmaschine zu ermöglichen.

Diese Aufgabe wird gelöst durch ein Verfahren zur Erstellung eines Teileprogramms, wobei das Teileprogramm Steuerbefehle aufweist anhand derer von einer Steuereinrichtung einer Werkzeugmaschine die Bewegungen eines Werkzeugs steuerbar sind, wobei Bewegungsinformationen, die Informationen über durchzuführende Bewegungen des Werkzeugs und durchzuführende Bearbeitungsvorgänge beinhalten, eingelesen werden, dadurch gekennzeichnet, dass Verfügbarkeitsinformationen eingelesen werden, die die an der Steuereinrichtung der Werkzeugmaschine für bestimmte durchzuführende Bearbeitungsvorgänge zur Verfügung stehenden Steuerungsunterprogramme angeben, wobei zur Erstellung des Teileprogramms die Steuerbefehle derart anhand der verfügbaren Steuerungsunterprogramme und den Bewegungsinformationen erzeugt werden, dass falls für einen durchzuführenden Bearbeitungsvorgang ein für den Bearbeitungsvorgang zugehöriges Steuerungsunterprogramm in der Steuereinrichtung zur Verfügung steht ein Steuerungsunterprogrammaufruf zum Aufruf des für den Bearbeitungsvorgang zugehörigen Steuerungsunterprogramms als Steuerbefehl erzeugt wird.

Vorteilhafte Ausbildungen des Verfahrens ergeben sich analog zur vorteilhaften Ausbildung des Rechners und umgekehrt.

Vorteilhafte Ausbildungen der Erfindung ergeben sich aus den abhängigen Ansprüchen.

Es erweist sich als vorteilhaft, wenn die Verfügbarkeitsinformationen von der Steuereinrichtung übermittelt werden. Hierdurch wird sichergestellt, dass die Verfügbarkeit Information immer aktuell auf dem neusten Stand sind und mit den tatsächlichen Gegebenheiten an der Steuereinrichtung der Werkzeugmaschine übereinstimmt.

Ferner erweist es sich als vorteilhaft, wenn ein Steuerungsunterprogramm als zur Verfügung stehendes Steuerungsunterprogramm angesehen wird, wenn es von einem Bediener innerhalb der Verfügbarkeitsinformationen als zur Verfügung stehend gekennzeichnet ist. Hierdurch wird sichergestellt, dass zur Erstellung des Teileprogramms nur diejenigen Steuerungsunterprogramme verwendet werden, die erfolgreich an der Werkzeugmaschine in Betrieb genommen oder getestet wurden.

Ferner erweist es sich als vorteilhaft, wenn die Bewegungsinformationen von einem CAM-System in einem standardisierten Datenformat erzeugt werden, da von einem handelsüblichen CAM-System in der Regel die Bewegungsinformation in einem standardisierten Datenformat erzeugt werden.

Ferner erweist es sich als vorteilhaft, wenn das standardisierte Datenformat in Form von CLDATA oder APT vorliegt, da CLDATA oder APT häufig verwendete standardisierte Datenformate sind.

Ferner erweist es sich als vorteilhaft, wenn die Verfügbarkeitsinformationen in einer Datei zusammen mit Maschinendaten der Werkzeugmaschine abgespeichert sind, da dann nur eine einzelne Datei benötigt wird, um die Verfügbarkeitsinformation und die Maschinendaten zu speichern.

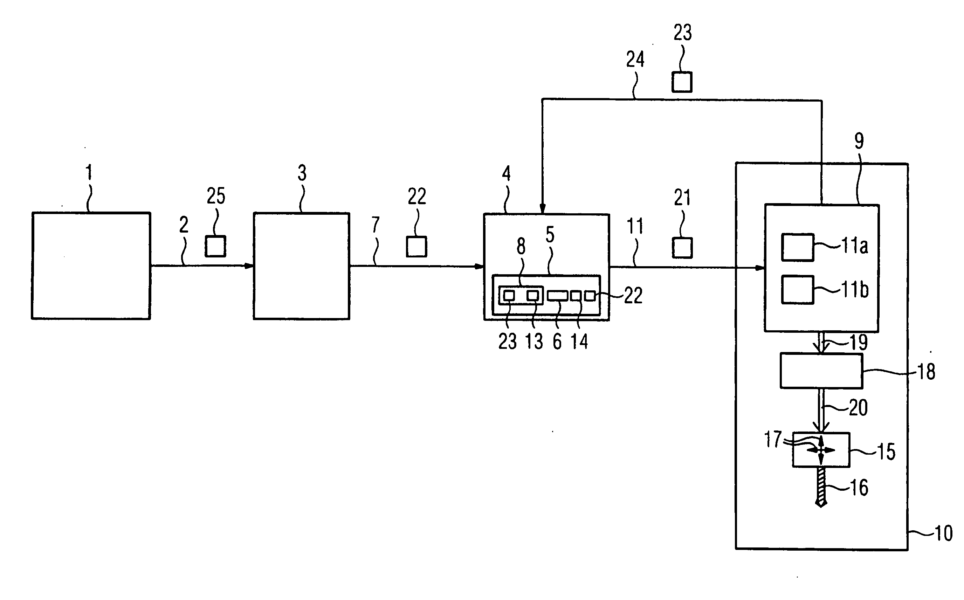

Ein Ausführungsbeispiel der Erfindung ist in der Zeichnung dargestellt und wird im Folgenden näher erläutert.

In der Figur ist in Form einer schematisierten blockförmigen Darstellung der Gesamtprozess, der bei der Erstellung eines Teileprogramms durchgeführt wird, dargestellt. Auf einem CAD-System 1 (Computer Aided Design) wird ein zu fertigendes Werkstück konstruiert und dargestellt. Das Werkstück weist dabei eine Geometrie auf, die mittels Geometriedaten 25 beschrieben wird, wobei die Geometriedaten des Werkstücks in der Regel in Form einer Punktewolke, die die äußere Kontur des Werkstücks wiedergibt, vorliegen. Die Geometriedaten 25 des Werkstücks werden an ein CAM-System 3 (Computer Aided Manufacturing) vom CAD-System 1 übermittelt, was durch einen Pfeil 2 dargestellt ist.

Das CAM-System 3 ermittelt aus den Geometriedaten 25 des Werkstücks und Geometriedaten eines Rohteils aus denen das Werkstück z.B. im Falle einer Fräsbearbeitung herausgefräst werden soll die zur Fräsbearbeitung des Rohlings notwendigen Bewegungen eines Werkzeugs 16 und damit die Bewegungen eines Maschinenelements, das z.B. im Rahmen des Ausführungsbeispiels in Form der Werkzeughaltevorrichtung 15 vorliegt. In die Werkzeughaltevorrichtung 15 ist dabei ein Werkzeug 16, das im Rahmen des Ausführungsbeispiels als Fräser ausgebildet ist, eingespannt. Die Werkzeughaltevorrichtung 15 und damit das Werkzeug 16 können dabei im Rahmen der zur Verfügung stehenden Kinematik der Werkzeugmaschine 10 in verschiedene Richtungen 17 bewegt werden. Die Bewegungen des Maschinenelements werden dabei von einer Steuereinrichtung 9, die im Rahmen des Ausführungsbeispiels in Form einer CNC-Steuerung vorliegt, gesteuert. Die Steuereinrichtung 9 erzeugt hierzu in einem äquidistanten Zeittakt Sollwerte als Regelsollwerte für ein Antriebssystem 18, das die Werkzeughaltevorrichtung 15 bewegt, was durch einen Pfeil 20 dargestellt ist. Die Sollwerte werden von der Steuereinrichtung 9 an das Antriebssystem 18 übermittelt, was durch einen Pfeil 19 in der Figur dargestellt ist Das Antriebssystem 18 beinhaltet dabei im Wesentlichen die zum Antreiben des Maschinenelements notwendigen Regeleinrichtungen, Stromrichter, Motoren und Getriebe.

Die Steuereinrichtung 9 steuert dabei die Bewegung des Werkzeugs 16 mittels eines Teileprogramms 21, das Steuerbefehle aufweist, anhand derer von der Steuereinrichtung 9 die Werkzeugmaschine 10 gesteuert wird. Das CAM-System 3 erzeugt ausgangsseitig aus den vom CAD-System 1 übermittelten Geometriedaten des Werkstücks und den Geometriedaten des Rohteils Bewegungsinformationen 22 über die zur Fertigung des Werkstücks aus dem Rohteil durchzuführenden Bewegungen des Werkzeugs 16. Die Bewegungsinformation 22 über die durchzuführenden Bewegungen des Werkzeugs 16 werden dabei vom CAM-System 3 in der Regel in einem standardisierten Datenformat, wie z.B. CLDATA oder APT erzeugt. Die Bewegungsinformationen beinhalten dabei Informationen über durchzuführende Bewegungen des Werkzeugs im Allgemeinen in Form von Lageinformationen, welche Lagen d.h. Positionen, der so genannte Tool Center Point des Werkzeugs 16 nacheinander einnehmen muss und damit welche Lagen d.h. Positionen, das Werkzeug 16 nacheinander einnehmen muss und infolge entsprechend bewegt werden muss, um das gewünschte Werkstück aus dem Rohteil zu fertigen, insbesondere herauszufräsen.

Die Bewegungsinformationen über die durchzuführenden Bewegungen liegen dabei in der Regel im Wesentlichen in Form von so genannten standardisierten GOTO-Anweisungen vor. Neben den Informationen über die durchzuführenden Bewegungen des Werkzeugs beinhalten die Bewegungsinformationen aber auch Information darüber, welcher Bearbeitungsvorgang mit den durchzuführenden Bewegungen ausgeführt wird. So können z.B. einige Bewegungen des Werkzeugs zu einem Schlichtbearbeitungsvorgang gehören, bei dem eine hohe Oberflächenqualität des Werkstücks erzielt werden soll und andere Bewegungen zu einem Schruppbearbeitungsvorgang zugehören, bei dem möglichst schnell ein großer Materialabtrag am Werkstück ohne Berücksichtigung der dabei entstehenden Oberflächenqualität des Werkstücks erfolgen soll.

Die Bewegungsinformationen 22 werden an einen Rechner 4 übermittelt (siehe Pfeil 7) und von einem Rechner 4 eingelesen, auf dem ein Computerprogramm 14 zur Erstellung des Teileprogramms abläuft, wobei der Rechner 4 in Verbindung mit dem auf dem ablaufenden Computerprogramm 14 fachspezifisch auch als Postprozessor bezeichnet wird.

Ein handelsüblicher Postprozessor erzeugt aus den vom CAM-System erzeugten Bewegungsinformationen 22 anhand von Maschinendaten 13 der Werkzeugmaschine 10 und PLC-Daten 6 (Programmable Logical Control) der Werkzeugmaschine 10 ein Teileprogramm 21, das an die Steuereinrichtung 9 zur Steuerung der Bewegung des Werkzeugs übermittelt wird, was durch einen Pfeil 11 in der Figur dargestellt ist. Die Maschinendaten beinhalten Information wie z.B. Informationen über die Kinematik der Werkzeugmaschine, das Antriebssystem der Werkzeugmaschine, zulässige Verfahrbereiche des Maschinenelements, und z.B. zulässige Maximalgeschwindigkeiten, maximale Beschleunigung und maximale Rücke mit der das Maschinenelement und damit das Werkzeug bewegt werden kann. Die PLC-Daten beinhalten z.B. Information über einen an der Werkzeugmaschine, falls vorhandenen, zur Verfügung stehenden Werkzeugwechsler, über die Türverriegelung der Werkzeugmaschine sowie Information über die Schmierung der Werkzeugmaschine und Informationen über die zur verfügbaren PLC-Befehle der Steuereinrichtung etc. Die Erzeugung eines Teileprogramms 21, anhand der Bewegungsinformationen 22, der Maschinendaten 13 und der PLC-Daten 6 zur Erstellung eines Teileprogramms 21 mittels eines Postprozessors ist Stand der Technik.

Dabei werden jedoch beim Stand der Technik, die in den Bewegungsinformationen 22 enthaltenen Informationen über die Bearbeitungsvorgänge zur Erstellung des Teileprogramms 21 vom Postprozessor nicht automatisiert verwendet werden.

Zur Erzielung von optimalen Bearbeitungsergebnissen weist die Steuereinrichtung 9 Steuerunterprogramme auf, die in der Regel vom Hersteller der Steuereinrichtung mitgeliefert werden. Die Steuerungsunterprogramme sorgen dafür, dass bei deren Aufruf für den im jeweiligen Steuerungsunterprogramm zugeordneten Bearbeitungsvorgang optimierte Steuerungs- und/oder Regelparameter in der Steuereinrichtung und/oder der Steuereinrichtungen nachgeschalten Regeleinrichtungen (z.B. innerhalb des Antriebssystems 18) zur optimierten Bewegungsführung des Werkzeugs verwendet werden und/oder bestimmte NC-Funktionalitäten, wie z.B. eine spezielle Durchführung der Bewegungen, welche infolge des speziellen Rucks, mit dem die Bewegungen des Werkzeugs durchgeführt werden, keine Eigenschwingungen der Maschine anregt werden und somit eine besonders gute Oberflächenqualität des Werkstücks beim Bearbeitungsvorgang erzielt werden kann, aktiviert werden. Weiterhin können auch bestimmte Einstellungen an der Steuereinrichtung, wie z.B. mit welchem Zeittakt die Sollwerte von der Steuereinrichtung 9 erzeugt und an das Antriebsystem 18 übermittelt werden, mittels der Steuerungsunterprogramme verändert werden und so für den jeweiligen Bearbeitungsvorgang optimierte Bewegungsverläufe des Werkzeugs erzielt werden.

Im Rahmen des Ausführungsbeispiels weist die Steuereinrichtung 9 ein Steuerungsunterprogramm 11a für den Bearbeitungsvorgang Schlichten und ein Steuerungsunterprogramm 11b für den Bearbeitungsvorgang Schruppen auf. Bei Aufruf des Steuerungsunterprogramms 11a wird von der Steuereinrichtung 9 dafür gesorgt, dass z.B. nachfolgende Steuerbefehle des Teileprogramms 21 mit dem im Steuerungsunterprogramm 11a definierten Parametern und NC-Funktionalitäten durchgeführt werden. Entsprechend wird bei Aufruf des Steuerungsunterprogramms 11a von der Steuereinrichtung 9 dafür gesorgt, dass z.B. nachfolgende Steuerbefehle des Teileprogramms mit dem im Steuerungsunterprogramm 11a definierten Parametern und NC-Funktionalitäten durchgeführt werden.

Die Steuerungsunterprogramme, die die Steuereinrichtung 9 aufweist und z.B. vom Hersteller der Steuereinrichtung 9 oder der Werkzeugmaschine 10 im Vorfeld implementiert wurden, sind an der Steuereinrichtung verfügbar. Die Information, nachfolgend Verfügbarkeitsinformationen genannt, welche Steuerungsunterprogramme an der Steuereinrichtung verfügbar sind werden von der Steuereinrichtung 9 an den Postprozessor d.h. den Rechner 4 übermittelt, was durch einen Pfeil 24 in der Figur dargestellt ist. Die Verfügbarkeitsinformationen 23 können dabei z.B. in Form einer Liste vorliegen in der vorzugsweise alle implementierten Steuerungsunterprogramme aufgelistet sind.

Häufig müssen die implementierten Steuerungsunterprogramme aber noch, z.B. bei der Inbetriebnahme der Werkzeugmaschine, durch einen Bediener, der z.B. in Form des Inbetriebnehmers vorliegen kann, getestet werden und als verlässlich erachtet werden. Im Rahmen einer vorteilhaften Ausführungsform der Erfindung werden nur die vom Bediener solchermaßen getesteten und innerhalb der Verfügbarkeitsinformationen ausdrücklich vom Bediener als zur Verfügung stehend gekennzeichneten Steuerungsunterprogramme, als zur Verfügung stehende Steuerungsunterprogramme angesehen. Die Verfügbarkeitsinformationen können dabei z.B. in Form einer Liste vorliegen in der vorzugsweise alle implementierten Steuerungsunterprogramme aufgelistet sind und der Bediener z.B. in einer entsprechenden Spalte der Liste durch Hineinschreiben einer "1" oder einer "0" hinter dem entsprechenden Steuerungsunterprogramm das entsprechende Steuerungsunterprogramm als zur Verfügung stehend gekennzeichnet. Eine "1" kennzeichnet das Steuerungsunterprogramm als zur Verfügung stehend, während eine "0" als das Steuerungsunterprogramm nicht zur Verfügung stehend kennzeichnet. Wie schon gesagt werden dabei vorzugsweise die vom Bediener getesteten Steuerungsunterprogramme als zur Verfügung stehende Steuerungsunterprogramme vom Bediener gekennzeichnet.

Die Verfügbarkeitsinformation 23, die im Ausführungsbeispiel in Form einer Liste vorliegen und die die an der Steuereinrichtung 9 der Werkzeugmaschine 10 zur Verfügung stehenden Steuerungsunterprogramme angeben, werden wie schon gesagt erfindungsgemäß von der Steuereinrichtung 9 an den Postprozessor d.h. den Rechner 4 übermittelt, was durch einen Pfeil 24 in der Figur dargestellt ist. Erfindungsgemäß werden nun zur Erstellung des Teileprogramms 21 vom Postprozessor die Verfügbarkeitsinformationen 23 und die als Bestandteil der Bewegungsinformationen 22 enthaltenen Informationen über die Bearbeitungsvorgänge mit verwendet. Erfindungsgemäß werden dabei zur Erstellung des Teileprogramms 21 die Steuerbefehle des Teileprogramms derart anhand der verfügbaren Steuerungsunterprogramme und den Bewegungsinformationen erzeugt, dass falls für einen durchzuführenden Bearbeitungsvorgang ein für den Bearbeitungsvorgang zugehöriges Steuerungsunterprogramm in der Steuereinrichtung zur Verfügung steht ein Steuerungsunterprogrammaufruf zum Aufruf des für den Bearbeitungsvorgang zugehörigen Steuerungsunterprogramms als Steuerbefehl erzeugt wird.

Wenn z.B. innerhalb der Bewegungsinformation 22 angegeben ist, dass nachfolgende durchzuführende Bewegungen zu dem Bearbeitungsvorgang Schlichten gehören, d.h. Bestandteil einer Schlichtbearbeitung sind, wird vom Postprozessor als Steuerbefehl ein Steuerungsunterprogrammaufruf zum Aufruf des für den Bearbeitungsvorgang Schlichten zugehörigen Steuerungsunterprogramms "Schlichten" 11a erzeugt und als Bestandteil des Teileprogramms in das Teileprogramm geschrieben. Ein solcher Steuerbefehl kann dann z.B. lauten "Cycle832 (Schlichten)". Nachfolgende von dem Postprozessor erzeugte Steuerbefehle werden dann mit den im Steuerungsunterprogramm "Schlichten" definierten Parametern und NC-Funktionalitäten von der Steuereinrichtung und/oder von der Steuereinrichtung 9 nach geschalteten Regeleinrichtungen bei der Bewegung des Werkzeugs ausgeführt.

Wenn z.B. innerhalb der Bewegungsinformation 22 angegeben wird, dass nachfolgende durchzuführende Bewegungen zu dem Bearbeitungsvorgang Schruppen gehören, d.h. Bestandteil einer Schruppbearbeitung sind, wird vom Postprozessor als Steuerbefehl ein Steuerungsunterprogrammaufruf zum Aufruf des für den Bearbeitungsvorgang Schruppen zugehörigen Steuerungsunterprogramms "Schruppen" 11b erzeugt und als Bestandteil des Teileprogramms in das Teileprogramm geschrieben. Ein solcher Steuerbefehl kann dann z.B. lauten "Cycle832 (Schruppen)". Nachfolgende von dem Postprozessor erzeugte Steuerbefehle werden dann mit den im Steuerungsunterprogramm "Schruppen" definierten Parametern und NC-Funktionalitäten von der Steuereinrichtung und/oder von der Steuereinrichtung 9 nach geschalteten Regeleinrichtungen bei der Bewegung des Werkzeugs ausgeführt.

Im Rahmen des Ausführungsbeispiels weist der Rechner 4 einen Massenspeicher 5, der z.B. in Form einer Festplatte vorliegen kann, auf. Auf dem Massenspeicher 5 ist das Computerprogramm 14 gespeichert, wobei bei Aufruf des Computerprogramms, z.B. durch einen Anwender, das Computerprogramm 14 in einen RAM-Speicher des Rechners 4 geladen wird und dort ausgeführt wird, so dass bei Aufruf des Computerprogramms 14 von dem Rechner das erfindungsgemäße Verfahren ausführbar ist. Vorzugsweise sind dabei die Maschinendaten 13 und die PLC-Daten 6 ebenfalls auf dem Massenspeicher 5 gespeichert. Weiterhin werden vorzugsweise ebenfalls die Verfügbarkeitsinformationen 23 auf dem Massenspeicher 5 gespeichert, wobei vorzugsweise die Verfügbarkeitsinformationen 23 und die Maschinendaten 13 innerhalb einer gemeinsamen Datei 8 gespeichert werden. Die Verfügbarkeitsinformationen 23 können dabei in einer Datenstruktur angelegt sein, die mit der Datenstruktur der Maschinendaten 13 übereinstimmt, so dass diese auf einfache Art und Weise vom Postprozessor eingelesen werden können. Weiterhin werden auch noch die Bewegungsinformationen 22 auf dem Massenspeicher 5 gespeichert.

## Patentansprüche

1. Verfahren zur Erstellung eines Teileprogramms (21), wobei das Teileprogramm (21) Steuerbefehle aufweist anhand derer von einer Steuereinrichtung (9) einer Werkzeugmaschine (10) die Bewegungen eines Werkzeugs (16) steuerbar sind, wobei Bewegungsinformationen (22), die Informationen über durchzuführende Bewegungen des Werkzeugs und durchzuführende Bearbeitungsvorgänge beinhalten, eingelesen werden, **dadurch gekennzeichnet, dass** Verfügbarkeitsinformationen (23) eingelesen werden, die die an der Steuereinrichtung (9) der Werkzeugmaschine (10) für bestimmte durchzuführende Bearbeitungsvorgänge zur Verfügung stehenden Steuerungsunterprogramme (11a,11b) angeben, wobei zur Erstellung des Teileprogramms (21) die Steuerbefehle derart anhand der verfügbaren Steuerungsunterprogramme (11a,11b) und den Bewegungsinformationen (22) erzeugt werden, dass falls für einen durchzuführenden Bearbeitungsvorgang ein für den Bearbeitungsvorgang zugehöriges Steuerungsunterprogramm (11a,11b) in der Steuereinrichtung (9) zur Verfügung steht ein Steuerungsunterprogrammaufruf zum Aufruf des für den Bearbeitungsvorgang zugehörigen Steuerungsunterprogramms (11a,11b) als Steuerbefehl erzeugt wird.

2. Verfahren nach Anspruch 1, **dadurch gekennzeichnet, dass** die Verfügbarkeitsinformationen (23) von der Steuereinrichtung (9) übermittelt werden.

3. Verfahren nach einem der vorhergehenden Ansprüche, **dadurch gekennzeichnet, dass** ein Steuerungsunterprogramm als zur Verfügung stehendes Steuerungsunterprogramm (11a,11b) angesehen wird, wenn es von einem Bediener innerhalb der Verfügbarkeitsinformationen (23) als zur Verfügung stehend gekennzeichnet ist.

4. Verfahren nach einem der vorhergehenden Ansprüche, **dadurch gekennzeichnet, dass** die Bewegungsinformationen (23) von einem CAM-System (3) in einem standardisierten Datenformat erzeugt werden.

5. Verfahren nach Anspruch 4, **dadurch gekennzeichnet, dass** das standardisierte Datenformat in Form von CLDATA oder APT vorliegt.

6. Verfahren nach einem der vorhergehenden Ansprüche, **dadurch gekennzeichnet, dass** die Verfügbarkeitsinformationen (23) in einer Datei (8) zusammen mit Maschinendaten (13) der Werkzeugmaschine (10) abgespeichert sind.

## Claims

1. Method for creating a parts program (21), the parts program (21) having control instructions which can be used by a control device (9) of a machine tool (10) to control the movements of a tool (16), movement information (22) which comprises information relating to movements of the tool which need to be carried out and machining operations to be carried out being read in, **characterized in that** availability information (23) which specifies the control subprograms (11a, 11b) available in the control device (9) of the machine tool (10) for particular machining operations to be carried out is read in, in which case, in order to create the parts program (21), the control instructions are generated using the available control subprograms (11a, 11b) and the movement information (22) in such a manner that, if a control subprogram (11a, 11b) associated with a machining operation to be carried out is available in the control device (9) for the machining operation, a control subprogram call for calling the control subprogram (11a, 11b) associated with the machining operation is generated in the form of a control instruction.

2. Method according to Claim 1, **characterized in that** the availability information (23) is transmitted by the control device (9).

3. Method according to one of the preceding claims, **characterized in that** a control subprogram is considered to be an available control subprogram (11a, 11b) if it has been marked as being available by an operator inside the availability information (23).

4. Method according to one of the preceding claims, **characterized in that** the movement information (23) is generated by a CAM system (3) in a standardized data format.

5. Method according to Claim 4, **characterized in that** the standardized data format is in the form of CLDATA or APT.

6. Method according to one of the preceding claims, **characterized in that** the availability information (23) is stored in a file (8) together with machine data (13) for the machine tool (10).

## Revendications

1. Procédé d'élaboration d'un programme ( 21 ) de pièce, dans lequel le programme ( 21 ) de pièce comporte des instructions de commande, au moyen desquelles les mouvements d'un outil ( 16 ) peuvent être commandés par un dispositif (9) de commande d'une machine-outil (10), dans lequel des informations (22) de déplacement, qui contiennent des informations sur des mouvements à effectuer par l'outil et des opérations d'usinage à effectuer sont lues, **caractérisé en ce que** sont lues des informations (23) de disponibilité, qui indiquent les sous-programmes ( 11a, 11b ) de commande à disposition sur le dispositif ( 9 ) de commande de la machine-outil ( 10 ), pour certaines opérations d'usinage à effectuer, dans lequel, pour l'élaboration du programme ( 21 ) de pièce, les instructions de commande sont produites au moyen des sous-programmes ( 11a, 11b ) de commande disponibles et des informations ( 22 ) de déplacement, **en ce que**, si, pour une opération d'usinage à effectuer, un sous-programme ( 11a, 11b) de commande associé à l'opération d'usinage est disponible dans le dispositif (9) de commande, il est produit comme instruction de commande une demande de sous-programme de commande pour la demande du sous-programme ( 11a, 11b ) de commande associé à l'opération d'usinage.

2. Procédé suivant la revendication 1, **caractérisé en ce que** les informations ( 23 ) de disponibilité sont transmises par le dispositif ( 9 ) de commande.

3. Procédé suivant l'une des revendications précédentes, **caractérisé en ce qu'**un sous-programme de commande est considéré comme un sous-programme ( 11a, 11b ) de commande disponible, lorsqu'il est caractérisé comme à disposition par un opérateur au sein des informations ( 23 ) de disponibilité.

4. Procédé suivant l'une des revendications précédentes, **caractérisé en ce que** les informations (23) de mouvement sont produites par un système CAM (3) dans un format de données normalisées.

5. Procédé suivant la revendication 4, **caractérisé en ce que** le format de données normalisées se présente sous la forme de CLDATA ou de ATP.

6. Procédé suivant l'une des revendications précédentes, **caractérisé en ce que** les informations ( 23 ) de disponibilité sont mémorisées dans un fichier (8) ensemble avec des données machine ( 13 ) pour la machine-outil ( 10 ).
